# EUROPÄISCHE PATENTSCHRIFT

(11) **EP 1 331 130 B1**
(45) Veröffentlichungstag und Bekanntmachung des Hinweises auf die Patenterteilung: **11.01.2006**
(21) Anmeldenummer: 02001836.2
(22) Anmeldetag: 26.01.2002
(51) Int. Cl.: B60N 2/02, B60N 2/16

(54) **Kraftfahrzeugsitz**
Motor vehicle seat
Siège de véhicule automobile

(43) Veröffentlichungstag der Anmeldung: 30.07.2003
(73) Patentinhaber: Ford Global Technologies, LLC, Dearborn, MI 48126 (US)
(72) Erfinder: Fischbein, Igor, 50765 Köln (DE)
(74) Vertreter: Drömer, Hans-Carsten

(56) Entgegenhaltungen:
- EP-A- 0 205 409
- JP-A- 54 090 715
- US-A- 2 646 839
- PATENT ABSTRACTS OF JAPAN vol. 008, no. 244 (M-337), 9. November 1984 (1984-11-09) -& JP 59 124440 A (TACHIKAWA SPRING KK), 18. Juli 1984 (1984-07-18)

## Beschreibung

Die Erfindung betrifft einen Sitz für ein Kraftfahrzeug mit einem Sitzunterbau zur Befestigung auf einem Fahrzeugboden, einem über eine Höhenverstellung höhenverstellbar auf dem Sitzunterbau angeordneten Sitzbereich mit einer Sitzfläche für einen Passagier des Fahrzeuges und einer um eine Schwenkachse schwenkbar mit dem Sitzbereich verbundenen Rückenlehne, wobei ein Absenken des Sitzbereichs durch die Höhenverstellung eine Neigung der Sitzfläche nach hinten bewirkt.

Ein Sitz für Kraftfahrzeuge dieser Art ist aus der DE 196 20 871 A bekannt. Bei sogenannten Rigid-Frame-Sitzen wird die Neigung des gesamten Sitzes während der Veränderung der Höhe nicht variiert beziehungsweise wird nur auf wenige Grad, meist 4-6°, beschränkt, um eine Nachjustieren der Rückenlehne zu minimieren bzw. zu vermeiden. Dagegen neigt sich bei sogenannten Split-Frame-Sitzen ausschließlich die Sitzfläche für den Fahrer bzw. Passagier durch verstärktes Absenken des hinteren Bereiches der Sitzfläche relativ zum vorderen Bereich. Dies hat den Vorteil, daß die Abstützung der unteren Seiten der Oberschenkel auch bei sehr großen Passagieren gewährleistet bleibt, die aufgrund der Länge des Unterschenkelknochens auch bei tiefer Sitzposition noch mit angewinkelten Beinen im Fahrzeug sitzen. Bei Rigid-Frame-Sitzen, die beispielsweise aus der EP 0882619 A bekannt sind, muß dies durch eine gesonderte Neigungsverstellung der Sitzfläche realisiert werden.

Split-Frame Sitze haben jedoch wiederum den Nachteil, daß konstruktionsbedingt ein vergleichsweise großer Spalt zwischen der Rückenlehne und dem Sitzkissen entsteht. Dieser mit "Bite-Line" bezeichnete Spalt führt zu einem unschönen ästhetischen Gesamteindruck und einer gerade im Bereich des unteren Rückens störenden Zugluft.

Obwohl die Split-Frame-Sitze eine selbsttätige Unterstützung der Oberschenkel durch Neigungswinkelverstellung der Sitzfläche bieten, weisen sie dennoch den Nachteil auf, daß die Oberschenkelunterstützung durch die Sitzflächenlänge begrenzt ist. Dies gilt auch für Rigid-Frame-Sitze einfacherer Bauart, bei denen z. B. die Sitzfläche nicht horizontal in Fahrzeugrichtung relativ zur Sitzlehne verschoben werden kann. Um auch kleineren Fahrem einen ausreichend hohen Sitzkomfort gewähren zu können, kann der Abstand der vorderen Kante der Sitzfläche nicht beliebig vergrößert werden, da ansonsten der Kniebereich zu nahe an der Sitzfläche angeordnet wäre. Bei großen Fahrern bewirkt jedoch eine zu kurze Sitzfläche wiederum eine unangenehme Druckkante im Bereich der Mitte des Oberschenkels, was zu einem verminderten Fahrkomfort oder sogar zu einem Blutstau führen kann.

Die EP 0 205 409 A offenbart einen Split-Frame-Sitz mit einem Sitzteil, einem Rückenteil und mit Halterungsmitteln für den Sitz, die parallellenkerartig ausgebildet sind und eine Einstellbewegung des Sitzes in Längsrichtung erlauben, wobei nur das Sitzteil geneigt wird. Dabei sind separate Halterungsmittel für das Sitzteil und das Rückenteil vorgesehen, so dass diese unterschiedliche longitudinale Bewegungen bei der Verstellung ausführen.

Aus der JP 54-90715 A ist ein Sitz bekannt, bei dem die Rückenlehne mit der Sitzfläche gekoppelt ist, so dass bei einer Verschiebung der Sitzfläche nach vorne und oben die Rückenlehne zur Einnahme einer "Liegeposition" abgeflacht wird. Ein aus der JP 59-124440 A bekannter Sitz weist eine ähnliche Konstruktion auf. Auch bei diesem ist die Sitzfläche mit der Rückenlehne über ein gemeinsames Gelenk gekoppelt und eine "Liegeposition" einstellbar.

Die US 2,646,839 A offenbart einen Split-Frame-Sitz, der eine Vielzahl von Verstellungsmöglichkeiten aufweist, bei dem sich jedoch die Rückenlehne ebenfalls nicht zusammen mit der Sitzfläche bei der Höhenverstellung neigt.

Aufgabe der Erfindung ist es daher, einen Rigid-Frame-Sitz für ein Kraftfahrzeug zu schaffen, der mit geringem Aufwand eine Höhenverstellung und eine Sitzflächenlängenverstellung ermöglicht.

Diese Aufgabe wird nach der Erfindung mit den Merkmalen des Anspruches 1 gelöst. Indem die Schwenkachse der Rückenlehne derart angeordnet ist, daß der Abstand h des unteren Randes der Rückenlehne zur Schwenkachse größer als der Abstand a der Schwenkachse zur passagierseitigen Oberfläche der Rückenlehne ist, und die Rückenbehne derart angeordnet ist, daß sich ihre Neigung proportional zur Änderung der Neigung der Sitzfläche ändert, bewirkt ein Schwenken der Rückenlehne um die Schwenkachse eine Bewegung des unteren Randes der Rückenlehne längs der Sitzfläche. Ein Schwenken der Rückenlehne in Richtung der Vertikalen bewirkt eine Vergrößerung der Länge der Sitzfläche bzw. in entgegengesetzter Richtung eine Verkleinerung der Länge der Sitzfläche und ergibt somit eine automatische Sitzlängenverstellung.

In einer bevorzugten Ausführung weist die mit der Höhenverstellung gekoppelte Neigung der Sitzfläche eine Maß auf, das über die üblichen 0° - 6° Neigungsänderung einer bekannten Sitzhöhenverstellung hinausgeht und bevorzugt über 10° Neigungsänderung zwischen höchster und tiefster Sitzposition beträgt. Durch die größere Sitzneigung ist auch die resultierende Sitzlängenverstellung größer.

Der untere Rand der Rückenlehne dreht sich auf einer Kreisbahn um die Schwenkachse. Ein großer Passagier wird nun den Sitz durch die Höhenverstellung absenken und dadurch zunächst eine Neigung des gesamten Sitzes nach hinten bewirken. Die Neigung der Rückenlehne ist dabei proportional zur Änderung der Neigung der Sitzfläche. Da erfahrungsgemäß fast alle Passagiere jedoch einen etwa gleichen Neigungswinkel der Rückenlehne bevorzugen, wird auch der große Fahrer diese Änderung des Neigungswinkels infolge der Sitzhöhenvariation wieder rückgängig machen und die Rückenlehne relativ zur Vertikalen wieder auf den ursprünglichen Winkel zurückstellen.

Da nun die Schwenkachse der Rückenlehne höher als üblich angeordnet ist, wird das unterhalb der Schwenkachse angeordnete freie Ende der Rückenlehne durch diese Drehung der Rückenlehne nach hinten wandem und einen größeren Bereich der Sitzfläche freigeben. Voraussetzung hierfür ist natürlich, daß die Sitzfläche in der rückwärts gerichteten Richtung ausreichend groß ist. Durch die Wiederherstellung des ursprünglichen Neigungswinkels der Rückenlehne relativ zur Vertikalen tritt also eine selbsttätige Veränderung der Länge des Sitzbereiches auf. Auf diese Weise ist eine gesonderte Sitzlängenverstellung oft entbehrlich beziehungsweise muß in höherwertigen Fahrzeugen nur noch in Ausnahmefällen zur Feineinstellung herangezogen werden, wenn der Fahrer aufgrund seiner Körpermaße eine individuelle Einstellung benötigt.

Bevorzugt ist die Schwenkachse oberhalb des sogenannten Seating Reference Points (SgRP) des Sitzes angeordnet. Obwohl bereits eine Verlagerung der Schwenkachse um eine Strecke, die größer als die Dicke der Rückenlehne im Bereich der Schwenkachse ist, ausreicht, wird in der Praxis zur effektiven Verlängerung der Sitzfläche ein wesentlicher größerer Versatz bevorzugt sein. Hier kommt beispielsweise eine Strecke von 100 - 150 mm, gemessen von der Sitzfläche, in Betracht.

Zur Realisierung der Neigungsverstellung des kompletten Sitzes ist dieser über zwei Schwenkarme mit dem Sitzunterbau verbunden, wobei die Höhenverstellung eine Drehung dieser Schwenkarme bewirkt. Die Schwenkarme sind dann so angeordnet, daß das Absenken des Sitzes eine Drehung jedes Schwenkarmes mit sich bringt. Bei dieser Gestaltung ergibt sich aufgrund der unterschiedlichen Y-Komponenten der Bewegungen im hinteren Bereich ein größeres Absenken als im vorderen Bereich, so daß die gewünschte Neigungsverstellung realisiert ist.

In einer bevorzugten Ausführung kann die Rückenlehne nach vorne in eine waagerechte Position abgesenkt und eingerastet werden. Wenn der Sitz nicht besetzt ist, kann die Rückenlehne in diese waagerechtem Position verbracht werden. Dann fungiert die Rückseite der Rückenlehne als Tisch oder bildet einen ebenen Ladeboden für eine verbesserte Durchlademöglichkeit.

Ein derartiger Aufbau eines Fahrzeugsitzes ermöglicht keine ebene Ruhefläche für einen Liegesitz, da hier die Rückenlehne mit ihrem unteren Rand oberhalb der Sitzfläche angeordnet ist. Es entsteht also eine Stufe zwischen der Sitzfläche und der vollständig abgeklappten Rückenlehne, die eine Liegesitzfunktion zunächst unmöglich machen würde. Eine bevorzugte Ausgestaltung eines Fahrzeugsitzes weist daher, ähnlich der Easy-Entry-Funktion, eine Schwenkmöglichkeit der gesamten Rückenlehne auf. Hierzu ist die Schwenkachse drehbar an zwei Schwenkarmen gelagert, die zu beiden Seiten der Rückenlehne angeordnet sind. In einer oberen und zumindest auch in einer unteren Position kann dieser Schwenkarm eingerastet werden, so daß zur Herstellung der Liegesitzfunktion nach Ausrasten einer Rastmöglichkeit der gesamte Bereich der Rückenlehne um die Länge des Schwenkarms zurückgeklappt werden kann. Auf diese Weise entsteht die ebene Liegefläche, wie sie bereits von herkömmlichen Sitzen bekannt ist.

Auch der erfindungsgemäße Fahrzeugsitz kann durch die Verwendung einer koaxial zu der Rückenlehnendrehachse angeordnete Lordosenstütze optimiert werden. Alternativ kann eine Rückenstütze von einem aufblasbaren Kissen gebildet sein, das beispielsweise, wie aus dem Stand der Technik bekannt, über eine seitliche Blasebalgvorrichtung aufgepumpt werden kann.

Das Kissen kann sowohl unter als auch oberhalb der Schwenkachse angeordnet sein; es ist auch möglich, es im Übergangsbereich so anzuordnen, daß ein Teil des Kissens unterhalb und ein Teil des Kissens oberhalb der Schwenkachse positioniert ist. Auch zwei getrennte Rückenkissen können vorgesehen werden, jeweils eines oberhalb und eines unterhalb der Schwenkachse.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
- Fig. 1: einen erfindungsgemäßen Sitz für eine Kraftfahrzeug in einer oberen Position in einer schematischen Seitenansicht,
- Fig. 2: den in Figur 1 dargestellten Sitz in einer unteren Position,
- Fig. 3: beide Positionen mit der Sitzverstellung in einer gemeinsamen schematischen Ansicht, und
- Fig. 4: den Sitz mit waagerechter Rückenlehne als Tisch.

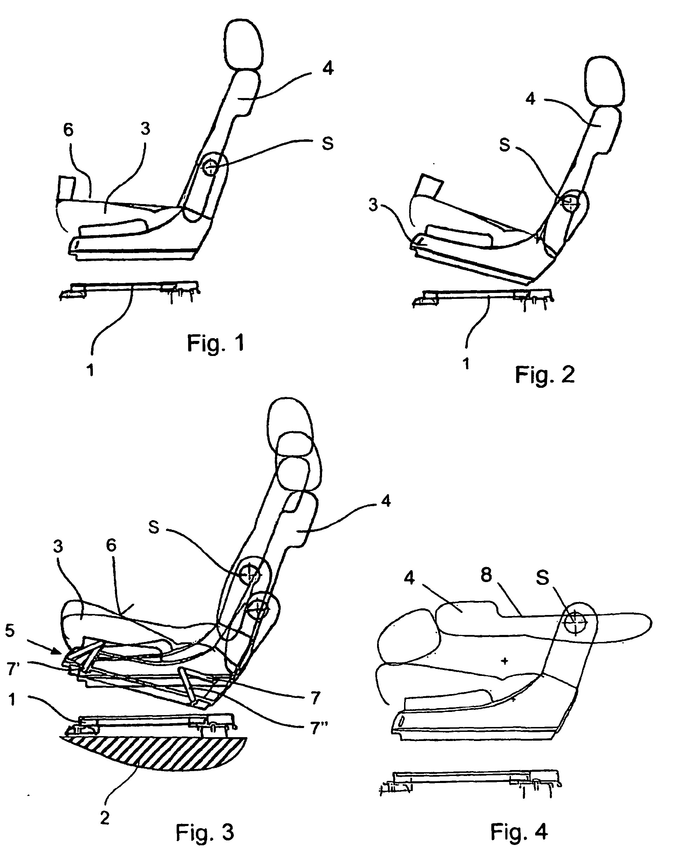

In Figur 1 ist ein erfindungsgemäßer Sitz für ein Kraftfahrzeug dargestellt. Der Sitz wird über einen Sitzunterbau 1 auf einem Fahrzeugboden 2 befestigt. Über eine hier nicht dargestellte Höhenverstellung 5 ist der auf den Sitzunterbau 1 angeordnete Sitzbereich 3 mit seiner Sitzfläche 6 in der Höhe verstellbar. Durch die besondere Ausgestaltung der Höhenverstellung 5 ergibt sich während der Höhenverstellung 5 eine geänderte Neigung der Sitzfläche 6 dergestalt, daß beim Absenken des Sitzes die Sitzfläche 6 im hinteren Bereich stärker abgesenkt wird als im vorderen Bereich.

Der Sitz weist eine Rückenlehne 4 auf, die im Bereich einer Schwenkachse S gelenkig mit dem Sitzbereich 3 verbunden ist. Die Höhe der Schwenkachse S ist so gewählt, daß sie oberhalb der Seating Reference Points (SgRP) liegt. Dies bewirkt, daß unterhalb der Schwenkachse S ein freies Ende der Rückenlehne 4 mit ihrem unteren Rand um die Schwenkachse S verschwenkt wird. Für die Sitzlängenverstellung bedeutend sind der Abstand h des unteren Randes der Rückenlehne (4) zur Schwenkachse (S) und der Abstand a der innerhalb der Rückenlehne (4) angeordneten Schwenkachse (S) zur passagierseitigen Oberfläche der Rückenlehne (4).

Bei Verstellen der Rückenlehne 4 wird nun dieser untere Rand auf einer Kreisbahn um die Schwenkachse S herum bewegt und variiert so den nutzbaren Sitzbereich 3. Bei Absenken des hinteren Bereichs der Sitzfläche 6 wird zunächst die Rückenlehne 4 nach hinten verschwenkt, was der Passagier durch Steiterstellen der Rückenlehne 4 kompensieren wird. Hierdurch wandert der untere Rand der Rückenlehne 4 nach hinten aus und es wird dem eine tiefe Sitzposition wählenden großen Passagier eine größere Sitzfläche 6 zur Verfügung gestellt. Der kleinere Passagier hingegen wird den Sitz wieder nach oben stellen, so daß er intuitiv die Rückenlehne 4 nach hinten verschwenken wird. Hierdurch wandert der untere Rand der Rückenlehen 4 wieder nach vorne und es wird eine kleinere Sitzfläche 6 zur Verfügung gestellt. Auf diese Weise wird selbsttätig die Sitzflächenlänge auf die Größe des Fahrers eingestellt.

In Figur 2 ist der in Figur 1 dargestellte Sitz in einer tieferen Position dargestellt. Hier ist zu erkennen, daß bei gleicher Neigung der Rückenlehne 4 eine wesentliche längere Sitzfläche 6 zur Verfügung steht.

Figur 3 zeigt die beiden Positionen der Sitzkomponenten, so wie sie in Figur 1 und 2 dargestellt ist, in einer gemeinsamen Darstellung, um die Verschiebung der jeweiligen Bauteile relativ zueinander infolge des Verstellens der Neigung der Sitzfläche 6 zu veranschaulichen.

In Figur 4 ist der Sitz mit nach vorne geklappter Rückenlehne 4 gezeigt. Die Rückenlehne 4 ist in einer solchen Position eingerastet, so daß die ebenen Bereiche der Rückseite 8 der Rückenlehne 4 sich in überwiegend waagerechter Stellung befindet. Die Rastung kann auch mittels einer stufenlos verstellbaren Feststelleinrichtung erfolgen, die eine Festsetzung der Rückenlehne in jeder Position ermöglicht. Damit läßt sich die Rückseite als Tisch benutzen. Auch bildet die Rückseite auf diese Weise einen ebenen Ladeboden, der z. B . die Durchlademöglichkeit verbessert. Die Rastung kann auch mittels einer stufenlos verstellbaren Feststelleinrichtung erfolgen, die eine Festsetzung der Rückenlehne in jeder Position ermöglicht. Zudem versteht sich von selbst, daß die Rückenlehne 4 auch noch weiter als in waagerechte Position geklappt werden kann, um z. B. einen größerer Gepäckraum zu erhalten.

## Patentansprüche

1. Sitz für ein Kraftfahrzeug mit einem Sitzunterbau (1) zur Befestigung auf einem Fahrzeugboden (2), einem über eine Höhenverstellung (5) höhenverstellbar auf dem Sitzunterbau (1) angeordneten Sitzbereich (3) mit einer Sitzfläche (6) für einen Passagier des Fahrzeuges und einer um eine Schwenkachse (S) schwenkbar mit dem Sitzbereich (3) verbundenen Rückenlehne (4), wobei ein Absenken des Sitzbereichs (3) durch die Höhenverstellung (5) eine Neigung der Sitzfläche (6) nach hinten bewirkt, wobei die Schwenkachse (S) der Rückenlehne (4) derart angeordnet ist, daß der Abstand h des unteren Randes der Rückenlehne (4) zur Schwenkachse (S) größer als der Abstand a der innerhalb der Rückenlehne (4) angeordneten Schwenkachse (S) zur passagierseitigen Oberfläche der Rückenlehne (4) ist.
**dadurch gekennzeichnet, daß**
die Rückenlehne (4) derart angeordnet ist,
- daß beim Absenken des Sitzes zunächst eine Neigung des gesamten Sitzes nach hinten bewirkt wird, wobei sich die Neigung der Rückenlehne (4) proportional zu Änderung der Neigung der Sitzfläche (6) ändert und die Neigungsänderung der Sitzfläche (6) keine Sitzlängenverstellung bewirkt, und
- daß eine Sitzlängenverstellung durch ein Schwenken der Rückenlehne (4) um die Schwenkachse (S) bewirkt wird.

2. Sitz für ein Kraftfahrzeug nach Anspruch 1, **dadurch gekennzeichnet, daß**
die mit der Höhenverstellung (5) gekoppelte Neigung der Sitzfläche (6) ein Maß von über 10° Neigungsänderung zwischen höchster und tiefster Sitzposition aufweist.

3. Sitz für ein Kraftfahrzeug nach Anspruch 1 oder 2,
**dadurch gekennzeichnet, daß**
die Schwenkachse (S) oberhalb des Seating Reference Point (SgRP) des Sitzes angeordnet ist.

4. Sitz für ein Kraftfahrzeug nach Anspruch 3,
**dadurch gekennzeichnet, daß**
die Schwenkachse (S) in einem Abstand von 50 mm bis 350 mm von der Sitzfläche angeordnet ist.

5. Sitz für ein Kraftfahrzeug nach einem der vorhergehenden Ansprüche,
**dadurch gekennzeichnet, daß**
der Sitz über Schwenkarme (7) mit dem Sitzunterbau (1) verbunden ist, wobei die Höhenverstellung (5) eine Drehung der Schwenkarme (7) bewirkt und zur Erzielung der Neigungsveränderung beim Absenken des Sitzbereiches (3) der vordere Schwenkarm (7') in Richtung der Vertikalen und der hintere Schwenkarm (7") in Richtung der Horizontalen bewegt wird.

6. Sitz für ein Kraftfahrzeug nach einem der vorhergehenden Ansprüche,
**dadurch gekennzeichnet, daß**
die Rückenlehne (4) nach vorne in eine waagerechte Position abgesenkt und eingerastet werden kann.

7. Sitz für ein Kraftfahrzeug nach einem der vorhergehenden Ansprüche,
**dadurch gekennzeichnet, daß**
zur Bildung einer ebenen Fläche bei vollständig nach hinten abgesenkter Rückenlehne (4) die Schwenkachse (S) um eine Drehachse drehbar an einem Schwenkarm gelagert ist, wobei der Schwenkarm eine Rastvorrichtung aufweist und die Schwenkachse (S) in einer oberen Position und zumindest einer unteren Position einrastbar ist.

8. Sitz für ein Kraftfahrzeug nach einem der vorhergehenden Ansprüche,
**dadurch gekennzeichnet, daß**
die Rückenlehne (4) eine zusätzliche Rückenstütze aufweist, die als aufblasbares Kissen in die Rückenlehne (4) integriert ist.

9. Sitz für ein Kraftfahrzeug nach Anspruch 8,
**dadurch gekennzeichnet, daß**
die Rückenstütze zumindest im einem Teil des Kissens unterhalb der Schwenkachse (S) angeordnet ist.

10. Sitz für ein Kraftfahrzeug nach Anspruch 8 oder 9,
**dadurch gekennzeichnet, daß**
die Rückenstütze unterhalb der Schwenkachse (5) angeordnet ist und die Rückenlehne (4) oberhalb der Schwenkachse (5) eine zweite Rückenstütze aufweist, die als aufblasbares Kissen in die Rückenlehne (4) integriert ist.

## Claims

1. Seat for a motor vehicle with a seat substructure (1) for fixing on a vehicle floor (2), a sitting area (3), which is arranged height-adjustably on the seat substructure (1) via a height-adjusting means (5) and has a seat surface (6) for a passenger of the vehicle, and a backrest (4) connected to the sitting area (3) in a manner such that it can pivot about a pivot spindle (S), a lowering of the sitting area (3) by the height-adjusting means (5) causing an inclination of the seat surface (6) to the rear, the pivot spindle (S) of the backrest (4) being arranged in such a manner that the distance h of the lower edge of the backrest (4) from the pivot spindle (S) is greater than the distance a of the pivot spindle (S), which is arranged within the backrest (4), from the passenger-side surface of the backrest (4), **characterized in that** the backrest (4) is arranged in such a manner
- that, when the seat is lowered, first of all an inclination of the entire seat to the rear is brought about, the inclination of the backrest (4) changing proportionally to the change in the inclination of the seat surface (6) and the change in inclination of the seat surface (6) not bringing about any adjustment of the seat length, and
- **in that** an adjustment of the seat length is brought about by pivoting the backrest (4) about the pivot spindle (S).

2. Seat for a motor vehicle according to Claim 1, **characterized in that** the inclination of the seat surface (6), which inclination is coupled to the height-adjusting means (5), has an extent of over 10° of change in inclination between highest and lowest seat position.

3. Seat for a motor vehicle according to Claim 1 or 2, **characterized in that** the pivot spindle (S) is arranged above the Seating Reference Point (SgRP) of the seat.

4. Seat for a motor vehicle according to Claim 3, **characterized in that** the pivot spindle (S) is arranged at a distance of 50 mm to 350 mm from the seat surface.

5. Seat for a motor vehicle according to one of the preceding claims, **characterized in that** the seat is connected to the seat substructure (1) via pivot arms (7), the height-adjusting means (5) bringing about a rotation of the pivot arms (7), and, in order to obtain the change in inclination during the lowering of the sitting region (3), the front pivot arm (7') is moved in the direction of the vertical and the rear pivot arm (7'') is moved in the direction of the horizontal.

6. Seat for a motor vehicle according to one of the preceding claims, **characterized in that** the backrest (4) can be lowered forwards and latched into a horizontal position.

7. Seat for a motor vehicle according to one of the preceding claims, **characterized in that**, in order to form a flat surface with the backrest (4) entirely lowered to the rear, the pivot spindle (S) is mounted on a pivot arm in a manner such that it can rotate about an axis of rotation, the pivot arm having a latching device and the pivot spindle (S) being latchable in an upper position and in at least one lower position.

8. Seat for a motor vehicle according to one of the preceding claims, **characterized in that** the backrest (4) has an additional back support which is integrated in the backrest (4) as an inflatable cushion.

9. Seat for a motor vehicle according to Claim 8, **characterized in that** the back support, at least in one part of the cushion, is arranged below the pivot spindle (S).

10. Seat for a motor vehicle according to Claim 8 or 9, **characterized in that** the back support is arranged below the pivot spindle (S), and above the pivot spindle (S) the backrest (4) has a second back support which is integrated in the backrest (4) as an inflatable cushion.

## Revendications

1. Siège de véhicule automobile, comprenant une structure inférieure de siège (1) pour la fixation sur un sol de véhicule (2), une partie de siège (3) disposée de manière réglable en hauteur sur la structure inférieure de siège (1) par le biais d'un réglage en hauteur (5), avec une surface de siège (6) pour un passager du véhicule et un dossier (4) associé à la partie de siège (3) de manière à pouvoir pivoter autour d'un axe de pivotement (S), un abaissement de la partie de siège (3) par le réglage en hauteur (5) provoquant une inclinaison vers l'arrière de la surface du siège (6), l'axe de pivotement (S) du dossier (4) étant disposé de telle sorte que la distance h du bord inférieur du dossier (4) à l'axe de pivotement (S) soit plus grande que la distance a de l'axe de pivotement (S) disposé à l'intérieur du dossier (4) à la surface du dossier (4) du côté du passager,
**caractérisé en ce que**
le dossier (4) est disposé de telle sorte
- que lors de l'abaissement du siège, une inclinaison de tout le siège vers l'arrière soit d'abord provoquée, l'inclinaison du dossier (4) variant de manière proportionnelle à la variation de l'inclinaison de la surface du siège (6) et la variation d'inclinaison de la surface du siège (6) ne provoquant aucun réglage en longueur du siège, et
qu'un réglage en longueur du siège soit provoqué par un pivotement du dossier (4) autour de l'axe de pivotement (S).

2. Siège pour un véhicule automobile selon la revendication 1,
**caractérisé en ce que**
l'inclinaison de la surface du siège (6) couplée au réglage en hauteur (5) présente une amplitude de plus de 10° de variation d'inclinaison entre la position de siège la plus haute et la plus basse.

3. Siège pour un véhicule automobile selon la revendication 1 ou 2,
**caractérisé en ce que** l'axe de pivotement (S) est disposé au-dessus du point de référence d'assise (Seating Reference Point, SgRP) du siège.

4. Siège pour un véhicule automobile selon la revendication 3,
**caractérisé en ce que**
l'axe de pivotement (S) est disposée à une distance de 50 mm à 350 mm de la surface du siège.

5. Siège pour un véhicule automobile selon l'une quelconque des revendications précédentes,
**caractérisé en ce que**
le siège est connecté par le biais de bras pivotants (7) à la structure inférieure du siège (1), le réglage en hauteur (5) provoquant une rotation des bras pivotants (7) et pour l'obtention de la variation d'inclinaison lors de l'abaissement de la partie de siège (3), le bras pivotant avant (7') étant déplacé dans la direction de la verticale et le bras pivotant arrière (7") étant déplacé dans la direction de l'horizontale.

6. Siège pour un véhicule automobile selon l'une quelconque des revendications précédentes,
**caractérisé en ce que**
le dossier (4) peut être abaissé et enclenché vers l'avant dans une position horizontale.

7. Siège pour un véhicule automobile selon l'une quelconque des revendications précédentes,
**caractérisé en ce que**
pour former une surface plane lorsque le dossier (4) est complètement abaissé vers l'arrière, l'axe de pivotement (S) est monté de manière à pouvoir tourner autour d'un axe de rotation sur un bras pivotant, le bras pivotant présentant un dispositif d'enclenchement et l'axe de pivotement (S) pouvant être enclenché dans une position supérieure et au moins une position inférieure.

8. Siège pour un véhicule automobile selon l'une quelconque des revendications précédentes,
**caractérisé en ce que**
le dossier (4) présente un support de dossier supplémentaire qui est intégré dans le dossier (4) sous forme de coussin gonflable.

9. Siège pour un véhicule automobile selon la revendication 8,
**caractérisé en ce que**
le support de dossier est disposé au moins dans une partie du coussin sous l'axe de pivotement (S).

10. Siège pour un véhicule automobile selon la revendication 8 ou 9,
**caractérisé en ce que**
le support de dossier est disposé sous l'axe de pivotement (S) et le dossier (4) présente, au-dessus de l'axe de pivotement (S), un deuxième support de dossier qui est intégré dans le dossier (4) sous forme de coussin gonflable.
